# EUROPÄISCHE PATENTANMELDUNG

(11) **EP 1 127 744 A2**
(43) Veröffentlichungstag der Anmeldung: **29.08.2001**
(21) Anmeldenummer: 01101935.3
(22) Anmeldetag: 29.01.2001
(51) Int. Cl.: B60Q 7/00

(54) **Zusammenlegbares Warndreieck**

(30) Priorität: 22.02.2000 DE 10008067
(71) Anmelder: GEBRA GMBH & CO. GEBR. RADERSCHAD KG, 53773 Hennef (DE)
(72) Erfinder: Pimmer, Holger, 53792 Lohmar (DE); Walgenbach, Reinhold, 53773 Hennef (DE); Stei, Alexander, 51545 Waldbröl (DE)
(74) Vertreter: Brandenburg, Thomas, Dr.

(57) **Zusammenfassung**

Zusammenlegbares Warndreieck zur Mitführung in Kraftfahrzeugen, mit drei roten rückstrahlenden Leisten (1,2,3), von denen die Basisleiste (3) mit einer Trägerplatte (9) verbunden ist, und an den beiden Enden auf beiden Seiten der Trägerplatte schwenkbar angebrachten Standbeinen (11), die aus ihrer an die Trägerplatte (9) eingeschwenkten Lage zur Seite ausschwenkbar sind,
dadurch gekennzeichnet, daß an der Unterkante der Trägerplatte (9) nahe ihren Enden je eine Lasche (10) mit einem ersten und einem zweiten Steg (10^{a} bzw. 10^{b}) ausgebildet ist, der erste zum Ende der Trägerplatte (9) weisende Steg (10^{a}) aus der Ebene der Trägerplatte zu der einen Seite abgewinkelt ist, der zweite, zur Mitte der Trägerplatte (9) weisende Steg (10^{b}) zu der anderen Seite der Trägerplattenebene abgewinkelt ist und an den abgewinkelten Stegen (10^{a},10^{b}) die abgewinkelten Enden der Standbeine (11) schwenkbar angebracht sind.

## Beschreibung

Die Erfindung betrifft ein zusammenlegbares Warndreieck zur Mitführung in Kraftfahrzeugen, mit drei roten rückstrahlenden Leisten, von denen die Basisleiste mit einer Trägerplatte verbunden ist, und an den beiden Enden auf beiden Seiten der Trägerplatte schwenkbar angebrachten Standbeinen, die aus ihrer an die Trägerplatte eingeschwenkten Lage zur Seite auschwenkbar sind.

Aus DE 2 006 275 ist ein Warndreieck bekannt, bei dem die beiden Standbeine an jedem der beiden Enden der Trägerplatte auf einer Buchse schwenkbar gelagert sind, die ihrerseits um eine zur Ebene des Dreiecks senkrechte Achse schwenkbar ist. Diese wie auch andere im Handel erhältliche Konstruktionen sind kompliziert in der Handhabung und der Konstruktion. So müssen zum Ausschwenken der beiden Standbeine an jedem Ende drei Schwenkbewegungen nacheinander vorgenommen werden: Zunächst müssen die beiden Standbeine zusammen aus dem Basisprofil ausgeschwenkt werden (Schwenkbewegung Y). Dann können die beiden Standbeine zur Seite ausgeschwenkt werden (Schwenkbewegung X). Die schwenkbare Buchse kompliziert die Konstruktion und erfordert ein U-förmiges Basisprofil. Durch die die Standbeine tragende Buchse bzw. die bei der im Handel erhältlichen Konstruktion stattdessen vorgesehene schwenkbare Lasche ergibt sich zwangsläufig eine Vergrößerung der Dicke des Warndreiecks im zusammengelegten Zustand.

Darüber hinaus ist es bekannt, die Standbeine des Warndreiecks in Standbeinhaltern aus Kunststoff schwenkbar zu lagern, die an den beiden Enden der Trägerplatte angebracht sind. Diese Standbeinhalter stellen hinsichtlich Material und Montage einen Kostenfaktor dar, vergl. EP-B-0 663 322.

Der vorliegenden Erfindung liegt die Aufgabe zugrunde, ein Warndreieck zu schaffen, bei dem die Anbringung der schwenkbaren Standbeine konstruktiv und montagemäßig vereinfacht ist. Insbesondere soll bei einfacher Montage die Dimension des zusammengelegten Warndreiecks nicht vergrößert werden. Weitere Vorteile ergeben sich aus der folgenden Beschreibung.

Diese Aufgabe wird bei dem eingangs genannten Warndreieck erfindungsgemäß dadurch gelöst, daß an der Unterkante der metallischen Trägerplatte nahe ihren Enden je eine Lasche mit einem ersten und einem zweiten Steg ausgebildet ist, der erste zum Ende der Trägerplatte weisende Steg aus der Ebene der Trägerplatte zu der einen Seite abgewinkelt ist, der zweite, zur Mitte der Trägerplatte weisende Steg aus der Ebene der Trägerplatte zu der anderen Seite abgewinkelt ist und an den abgewinkelten Stegen die abgewinkelten Enden der Standbeine schwenkbar angebracht sind. Das erfindungsgemäße Warndreieck zeichnet sich dadurch aus, daß die Standbeine unmittelbar an der metallischen Trägerplatte ohne Zwischenschaltung separater Konstruktionsteile, wie Standbeinhalter, Buchsen, angebracht sind. Die Trägerplatte ist hierzu an den beiden Enden an ihrer Unterkante derart ausgebildet und verformt, daß an diesen Stellen die Standbeine angebracht werden können und dann zwischen den beiden extremen Schwenklagen schwenkbar sind, d.i. an die Trägerplatte eingeschwenkte Lage bei zusammengelegtem Warndreieck und die vollständig ausgeschwenkte Lage, in der das Warndreieck durch die Standbeine mit Bodenabstand aufgestellt werden kann. Zunächst wird die metallische Trägerplatte mit den in der Plattenebene liegenden, angeformten Laschen gefertigt, und in einer zweiten Stufe werden die voneinander weg weisenden Stege nach der einen bzw. der anderen Seite der Trägerplattenebene abgewinkelt, so daß sie die zur Anbringung der Standbeine erforderliche Neigung zur Trägerplattenebene haben und die daran angebrachten Standbeine etwa symmetrische Schwenkbewegungen ausführen können. Dabei müssen die zur Anbringung vorgesehenen Standbeinenden ebenfalls entsprechend der Stegabwinkelung abgewinkelt sein. Die Anbringung der Standbeine erfolgt vorzugsweise durch Nieten, die die Schwenkung der Standbeine relativ zur Trägerplatte zulassen.

Vorzugsweise ist der erste Steg um einen Winkel in dem Bereich von 20 bis 45° aus der Trägerplattenebene abgewinkelt. Insbesondere liegt dieser Winkel in dem Bereich von 30 bis 40°, beispielsweise bei etwa 35°. Dabei sind die ersten Stege und die daran angebrachten Standbeinenden im wesentlichen um den gleichen Winkel abgebogen, so daß bei zusammengelegtem Warndreieck die metallische Trägerplatte und die eingeschwenkten Standbeine im wesentlichen parallel zueinander liegen.

Ferner ist bei der bevorzugten Ausführungsform des Warndreiecks der zweite Steg um einen Winkel in dem Bereich von 135 bis 160°C aus der Trägerplattenebene abgewinkelt. Zweckmäßigerweise liegt dieser Winkel in dem Bereich von 140 bis 150°, insbesondere z.B. bei 145°. Die an die zweiten Stege angebrachten Standbeinenden sind im wesentlichen um einen Winkel abgewinkelt, der zu dem Winkel des zweiten Steges komplementär ist, d.h. diesen zu 180° ergänzt. So ist gewährleistet, daß beim zusammengelegten Warndreieck auch diese Standbeine etwa in Parallellage zu der metallischen Trägerplatte sind.

Vorzugsweise ist an den Stegen eine die Schwenkbewegung der Standbeine begrenzende Anschlagnase ausgebildet. Dadurch wird gewährleistet, daß die vier Aufsetzpunkte der gänzlich ausgeschwenkten Standbeine das maximale Rechteck markieren und das aufgestellte Warndreieck die größtmögliche Standfestigkeit hat.

Zweckmäßigerweise sind die Laschen in einem solchen Abstand von den Trägerplattenenden angeformt, daß die ersten Stege nach ihrer Abwinkelung die Enden des zusammengelegten Warndreiecks nicht überragen. Die erfindungsgemäße Anbringung der Standbeine führt daher nicht zu einer Verlängerung des Warndreiecks im zusammengelegten Zustand. Die Breite des zusammengelegten Warndreiecks kann durch die direkte Anbringung der Standbeine an der Trägerplatte im Vergleich zu bekannten Konstruktionen sogar verringert werden.

Die Trägerplatte und/oder die Standbeine können aus Metall oder Kunststoff bestehen. Im allgemeinen bestehen sie aus Metall. Vorzugsweise sind die Enden des Standbeins mittels eingesetzter Niete, angeformter Zapfen oder Lochen und Durchziehen durch ein Gegenloch an den Stegen angebracht. An der Trägerplatte kann zusätzlich zu den Laschen wenigstens noch eine Halteklammer zur Festlegung der eingeschwenkten Standbeine angeordnet sein. Die Standbeine können in diese Halteklammer einrasten oder eingeklemmt werden, so daß die Standbeine voneinander und von der Trägerplatte auf Abstand gehalten werden und Geräuschentwicklung infolge z.B. von Vibrationen vermieden werden.

Eine Ausführungsform des erfindungsgemäßen zusammenlegbaren Warndreiecks wird nachfolgend an Hand der Zeichnung näher beschrieben. Es zeigen
Figur 1 die Ansicht eines aufgerichteten Warndreiecks mit eingeschwenkten Standbeinen;
Figur 2 eine Bodenansicht des einen Endes des in Figur 1 gezeigten Warndreiecks in vergrößertem Maßstab;
Figur 3 die gleiche Ansicht wie in Figur 2, jedoch mit ausgeschwenkten Standbeinen;
Figur 4 eine Seitenansicht entsprechend Pfeil P der Figur 1 in vergrößertem Maßstab; und
Figur 5 drei zur Anwendung kommende Anlenkarten der Standbeine.

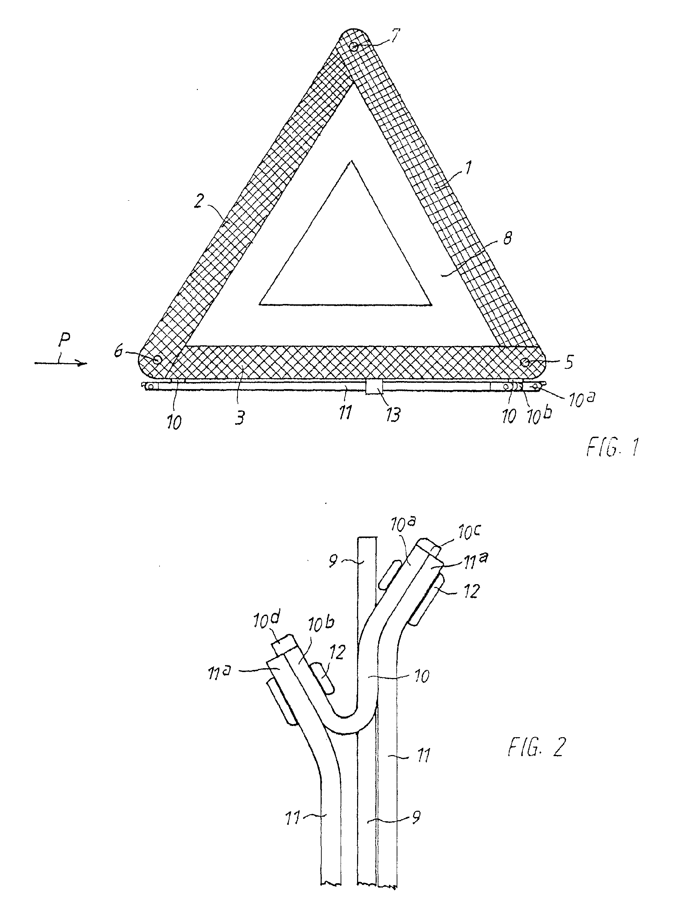

Das in Figur 1 gezeigte Warndreieck hat drei rote rückstrahlende Kunststoffleisten 1,2,3, von denen die Leiste 1 um das Gelenk 5 und die Leiste 2 um das Gelenk 6 zu der Basisleiste 3 schwenkbar sind. Die den Gelenken 5 und 6 entgegengesetzten Enden der Leisten 1 und 2 haben einen Druckknopf 7, so daß die Leisten 1,2 in der in Figur 1 gezeigten aufgerichteten Lage unter Bildung eines Dreiecks an ihren oberen Enden lösbar verbunden werden können. An den Punkten 5,6 und 7 der Leisten 3,2 und 1 ist eine dreieckige Kunststofffolie 8 mit vorderseitig rot fluoreszierender Oberfläche und innerem dreieckigem Ausschnitt angebracht, die sich beim Aufrichten der Leisten 1,2 entfaltet und spannt.

Die Basisleiste 3 ist rückseitig mit einer metallischen Trägerplatte 9 fest verbunden, die in Figur 1 nicht sichtbar ist und die etwa die Länge der Basisleiste 3 hat. An der Unterkante der Trägerplatte 9 sind nahe den beiden Plattenenden nach unten ragende Laschen 10 angeformt. Jede Lasche 10 hat einen ersten Steg 10^{a} und einen zweiten Steg 10^{b}. Der erste Steg 10^{a} ist aus der Ebene der Trägerplatte 9 zur Seite um einen Winkel von etwa 35° abgewinkelt. Der zweite an die Lasche 10 angeschnittene Steg 10^{b} ist aus der Ebene der Trägerplatte 9 um einen Winkel von etwa 145° zur anderen Seite der Trägerplattenebene abgewinkelt. An die abgewinkelten Stege 10^{a} und 10^{b} sind mittels Nieten 12 die abgewinkelten Enden 11^{a} derStandbeine 11 schwenkbar angebracht.

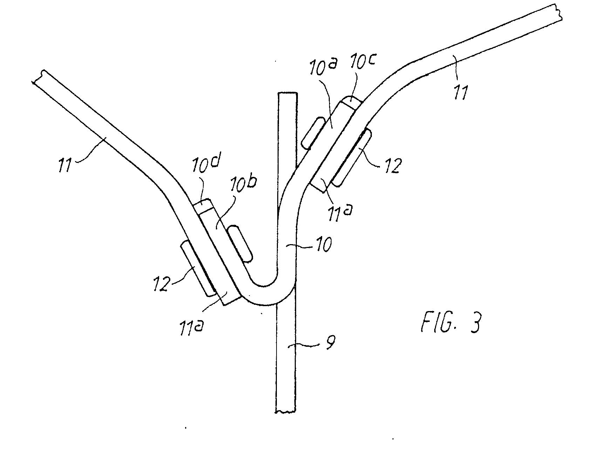

Figur 3 entspricht der Figur 2, zeigt aber die Standbeine 11 in ihrer gänzlich ausgeschwenkten Position. Die Stege 10^{a},10^{b} haben an ihren Enden Anschlagnasen 10^{c} bzw. 10^{d}, an denen die Standbeine 11^{a} in der gänzlich ausgeschwenkten Lage anliegen, wodurch ihre Ausschwenkbewegung begrenzt ist.

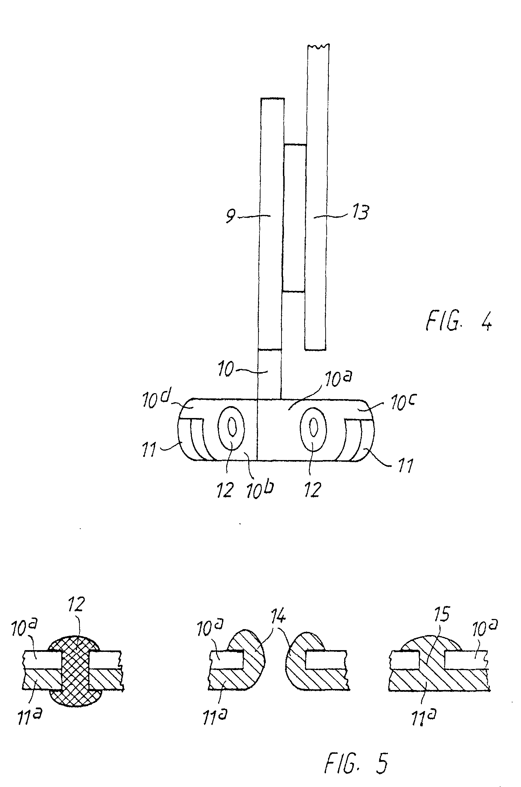

Figur 4 zeigt die Anbringung der Standbeine 11 in der Seitenansicht. Die Standbeine sind vollkommen eingeschwenkt.

Bei dem erfindungsgemäßen Warndreieck sind die Standbeine 11 direkt an der Trägerplatte 9 angelenkt, woraus eine einfache kostengünstige Konstruktion resultiert. Durch geeigneten umgekehrt T-förmigen Zuschnitt der Laschen und Abwinkelung ihrer Stege (10^{a},10^{b}) wird erreicht, daß die daran angelenkten Standbeine 11 im eingeschwenkten Zustand raumsparend neben und parallel zur Trägerplatte 9 liegen und sich im ausgeschwenkten Zustand das aufgestellte Warndreieck auf den Eckpunkten eines maximalen Rechtecks abstützt. Die Trägerplatte 9 hat bei der dargestellten Ausführungsform an der Unterkante eine Halteklammer 13 (Figur 1), in die die Standbeine 11 in ihrer eingeschwenkten Lage einrasten oder eingeklemmt werden können, so daß sie festgelegt sind.

Figur 5 zeigt drei Möglichkeiten der gelenkigen Verbindung zwischen dem Steg 10^{a} (oder 10^{b}) und dem Standbeinende 11^{a} mittels eines eingesetzten Niet 12 oder mittels Lochen des Standbeins 11^{a} und Durchziehen des Lochmaterials durch das Loch des Steges 10^{a} unter Bildung entsprechender Wülste 14. Schließlich kann an dem Standbeinende 11^{a} ein Zapfen 15 angeformt sein, der durch das Loch des Steges 10^{a} greift und auf dem Steg flachgedrückt wird. Alle drei Ausführungen können sowohl bei metallischem Werkstoff als auch bei Kunststoff zur Anwendung kommen.

## Patentansprüche

1. Zusammenlegbares Warndreieck zur Mitführung in Kraftfahrzeugen, mit drei roten rückstrahlenden Leisten (1,2,3), von denen die Basisleiste (3) mit einer Trägerplatte (9) verbunden ist, und an den beiden Enden auf beiden Seiten der Trägerplatte schwenkbar angebrachten Standbeinen (11), die aus ihrer an die Trägerplatte (9) eingeschwenkten Lage zur Seite ausschwenkbar sind,
dadurch gekennzeichnet, daß an der Unterkante der Trägerplatte (9) nahe ihren Enden je eine Lasche (10) mit einem ersten und einem zweiten Steg (10^{a} bzw. 10^{b}) ausgebildet ist, der erste zum Ende der Trägerplatte (9) weisende Steg (10^{a}) aus der Ebene der Trägerplatte zu der einen Seite abgewinkelt ist, der zweite, zur Mitte der Trägerplatte (9) weisende Steg (10^{b}) zu der anderen Seite der Trägerplattenebene abgewinkelt ist und an den abgewinkelten Stegen (10^{a},10^{b}) die abgewinkelten Enden der Standbeine (11) schwenkbar angebracht sind.

2. Warndreieck nach Anspruch 1, dadurch gekennzeichnet, daß der erste Steg (10^{a}) um einen Winkel in dem Bereich von 20 bis 45° aus der Trägerplattenebene abgewinkelt ist.

3. Warndreieck nach Anspruch 1 oder 2, dadurch gekennzeichnet, daß der erste Steg (10^{a}) um einen Winkel in dem Bereich von 30 bis 40° abgewinkelt ist.

4. Warndreieck nach einem der Ansprüche 1 bis 3, dadurch gekennzeichnet, daß die zweiten Stege (10^{b}) um einen Winkel in dem Bereich von 135 bis 160° aus der Trägerplattenebene abgewinkelt sind.

5. Warndreieck nach einem der Ansprüche 1 bis 4, dadurch gekennzeichnet, daß die zweiten Stege (10^{b}) um einen Winkel in dem Bereich von 140 bis 150° abgewinkelt sind.

6. Warndreieck nach einem der Ansprüche 1 bis 5, dadurch gekennzeichnet, daß an den Stegen (10^{a},10^{b}) eine die Schwenkbewegung der Standbeine (11) begrenzende Anschlagnase (10^{c} bzw. 10^{d}) ausgebildet ist.

7. Warndreieck nach einem der Ansprüche 1 bis 6, dadurch gekennzeichnet, daß die Laschen (10) in einem Abstand von den Trägerplattenenden angeformt sind, so daß die ersten Stege (10^{a}) nach ihrer Abwinkelung die Enden des zusammengelegten Warndreiecks nicht überragen.

8. Warndreieck nach einem der Ansprüche 1 bis 7, dadurch gekennzeichnet, daß die ersten Stege (10^{a}) und die daran angebrachten Standbeinenden (11^{a}) im wesentlichen um den gleichen Winkel abgewinkelt sind und die zweiten Stege (10^{b}) und die daran angebrachten Standbeinenden (11^{a}) im wesentlichen um komplementäre Winkel abgewinkelt sind.

9. Warndreieck nach einem der Ansprüche 1 bis 8, dadurch gekennzeichnet, daß die Trägerplatte (9) und/oder die Standbeine (11) aus Metall oder Kunststoff bestehen.

10. Warndreieck nach einem der Ansprüche 1 bis 9, dadurch gekennzeichnet, daß die Enden der Standbeine (11) mittels eingesetzter Niete (12), angeformter Zapfen oder Lochen und Durchziehen an den Stegen (10^{a},10^{b}) angebracht sind.

11. Warndreieck nach einem der Ansprüche 1 bis 10, dadurch gekennzeichnet, daß an der Trägerplatte (9) wenigstens eine Halteklammer (13) zur Festlegung der Standbeine (11) in ihrer eingeschwenkten Lage angebracht sind.
